# EUROPÄISCHE PATENTSCHRIFT

(11) **EP 4 201 784 B1**
(45) Veröffentlichungstag und Bekanntmachung des Hinweises auf die Patenterteilung: **04.06.2025**
(21) Anmeldenummer: 23157596.0
(22) Anmeldetag: 17.10.2019
(51) Int. Cl.: B61C 7/04, B61C 5/00

(54) **ANORDNUNG ZUM ANTRIEB EINER LOKOMOTIVE MIT UNTERSCHIEDLICHEN ENERGIEBEREITSTELLUNGSSYSTEMEN**
ARRANGEMENT FOR DRIVING A LOCOMOTIVE HAVING DIFFERENT ENERGY PROVISION SYSTEMS
ENSEMBLE DE PROPULSION D'UNE LOCOMOTIVE, COMPRENANT DIFFÉRENTS SYSTÈMES DE FOURNITURE D'ÉNERGIE

(30) Priorität: 04.12.2018 DE 102018220931
(43) Veröffentlichungstag der Anmeldung: 28.06.2023
(62) Teilanmeldung aus: 19795128.8
(73) Patentinhaber: Siemens Mobility GmbH, 81739 München (DE)
(72) Erfinder: Lauer, Stefan, 91052 Erlangen (DE); Höscheler, Bernhard, 91058 Erlangen (DE)
(74) Vertreter: Siemens Patent Attorneys

(56) Entgegenhaltungen:
- EP-A1- 1 186 497
- EP-A1- 3 184 349
- CN-A- 108 068 833
- DE-A1- 10 064 973
- DE-A1- 102008 056 008
- DE-A1- 102017 201 408
- DE-A1- 19 718 425
- US-A- 5 735 215
- US-A1- 2009 293 759
- US-A1- 2016 264 152
- US-B2- 9 975 435
- CHRISTOPH SCHAETZER ET AL: "Last Mile - die neue Funktion der TRAXX AC3 Lokomotiven", EB- ELEKTRISCHE BAHNEN, DIV-DEUTSCHER INDUSTRIEVERLAG, DE, vol. 110, no. 8-9, 1 August 2012 (2012-08-01), pages 432 - 442, XP001526070, ISSN: 0013-5437

## Beschreibung

Anordnung zum Antrieb einer Lokomotive mit unterschiedlichen Energiebereitstellungssystemen.

Die Erfindung betrifft eine Anordnung zum Antrieb einer Lokomotive mit unterschiedlichen Energiebereitstellungssystemen.

Es sind Lokomotiven mit unterschiedlichen Energieversorgungssystemen bekannt, die jeweils unabhängig voneinander in der Lokomotive angeordnet sind und unabhängig voneinander betrieben werden.

Eine Zweikraftlokomotive verwendet beispielswiese als erstes Energieversorgungssystem einen Dieselmotor, der einen mit dem Dieselmotor gekoppelten elektrischen Generator antreibt. Eine dadurch erzeugte elektrische Leistung wird an elektrische Antriebsmotoren der Lokomotive übertragen, die dann die Lokomotive antreiben.

Parallel dazu ist auf der Lokomotive ein zweites, beispielsweise ein elektrisches, Energieversorgungssystem vorhanden. Die Lokomotive entnimmt über einen Stromabnehmer bzw. Pantographen elektrische Leistung aus einer Hochspannungs-Oberleitung und führt diese über einen Hauptschalter einem Transformator zu. Der Transformator wandelt die Hochspannung auf einen niedrigeren Mittelspannungswert herunter. Die Mittelspannung wird dann über einen sogenannten Vierquadrantensteller und einem diesem nachgeschalteten Wechselrichter wiederum elektrischen Antriebsmotoren der Lokomotive zugeführt, die dann die Lokomotive antreiben.

Derartige Lokomotiven sind flexibel einsetzbar, da sie als Schienenfahrzeuge mit Stromabnehmer und mit Dieselmotor auf elektrifizierten Strecken, auf nicht-elektrifizierten Strecken sowie in deren Übergangsbereichen nahezu unterbrechungsfrei fahren können.

Nachteilig ist hingegen, dass ein derartiges Schienenfahrzeug eine hohe Gesamtmasse und ein großes Volumen aufweist, bedingt durch die beiden parallel ausgebildeten Energieversorgungssysteme bzw. ihrer Komponenten.

Aufgrund von gegebenen Beschränkungen im Volumen des Schienenfahrzeugs und in dessen zulässigem Gesamtgewicht ist die Anzahl der zu nutzenden Energieerzeugungssysteme begrenzt. Im Allgemeinen sind zwei, maximal drei Energieversorgungssysteme pro Schienenfahrzeug bzw. pro Schienenfahrzeug-Zugverband vorgesehen.

Es ist auch bekannt, für eine zeitlich versetzte Nutzung von unterschiedlichen Energieversorgungssystemen eine erste Lokomotive, die beispielsweise über einen Dieselantrieb verfügt, und eine zweite Lokomotive, die beispielweise über einen Stromabnehmer sowie über Drehstrommotoren verfügt, miteinander zu koppeln und diese gekoppelten Lokomotiven als Zugverband einzusetzen. Je nach Streckenabschnitt wird dann eine der beiden Lokomotiven als Zugfahrzeug, beispielsweise von Waggons, etc., benutzt.

Aufgrund des Gewichts, des Fahrwiderstands und der Masse der jeweils nicht benötigten Lokomotive wird sowohl zusätzlich Leistung verbraucht als auch der Wartungsaufwand erhöht. Letztlich ist die Zugverband-Lösung zwar einfach realisierbar, verursacht jedoch große Kosten im Betrieb.

Aus Dokument DE 102017201408 A1 ist ein Eisenbahnzug bekannt, der ein Triebfahrzeug mit einem elektrischen Fahrmotor und einen von einem Dieselmotor angetriebenen Generator umfasst. An das Triebfahrzeug ist ein Reisezugwagen mit einem Stromabnehmer angekoppelt. Über einen Transformator des Reisezugwagens wird elektrische Energie vom Reisezugwagen zum Triebfahrzeug übertragen.

Aus Dokument EP 1 186 497 A1 ist ein Schienenfahrzeug mit mehreren Energieversorgungssystemen bekannt.

Aus Dokument US 2016264152 A1 ist eine Lokomotive mit einem Generator zur Erzeugung elektrischer Energie bekannt. Die Lokomotive ist mit einem Hilfsfahrzeug verbunden, das über eine Stromempfangsvorrichtung von einem externen Stromnetz verfügt. Zum Hilfsfahrzeug gehört außerdem ein Transformator, der elektrisch mit einem Elektromotor der Lokomotive gekoppelt ist, um der Lokomotive gezielt elektrische Energie zuzuführen.

Aus Dokument DE 100 64 973 A1 ist ein elektrisches Energieversorgungssystem eines Triebzuges (1) mit Antriebseinheiten (2) für ein erstes Spannungssystem bekannt. Mindestens ein separates, mit dem Triebzug elektrisch gekuppeltes, energiespeisendes Fahrzeug (3) ist mit einer Einheit (4, 7) zum **Ab**griff und zur Umwandlung elektrischer Energie mindestens eines zweiten Spannungssystems in elektrische Energie des ersten Spannungssystems vorgesehen.

Es ist daher die Aufgabe der vorliegenden Erfindung, eine verbesserte Lösung für eine Lokomotive anzugeben, die eine kostengünstige Nutzung unterschiedlicher Energieversorgungen ermöglicht.

Diese Aufgabe wird durch die Merkmale des Anspruchs 1 gelöst. Vorteilhafte Weiterbildungen sind in den abhängigen Ansprüchen angegeben.

Die Erfindung betrifft eine Anordnung zum Antrieb einer Lokomotive mit unterschiedlichen Energiebereitstellungssystemen, wobei die Lokomotive ein Hauptenergiebereitstellungssystem als Hauptsystem und ein Antriebssystem mit Fahrmotoren beinhaltet.

Vom Hauptsystem bereitgestellte Energie wird als Antriebsleistung dem Antriebssystem zugeführt und von diesem zum Bewegen der Lokomotive verwendet.

Ein Wagen beinhaltet zumindest ein weiteres Energiebereitstellungssystem als Nebensystem, wobei das zumindest eine Nebensystem zeitversetzt zum Hauptsystem dazu verwendet wird, Antriebsleistung dem Antriebssystem zuzuführen.

Komponenten, die sowohl vom Hauptsystem als auch von dem zumindest einen Nebensystem nutzbar sind, sind lediglich einmal ausgeführt und werden sowohl vom Hauptsystem als auch vom zumindest einen Nebensystem gemeinsam genutzt.

Komponenten, die ausschließlich von dem zumindest einen Nebensystem nutzbar sind, sind auf dem Wagen angeordnet.

Die vom Energiebereitstellungssystem bereitgestellte bzw. umgeformte Energie wird als Antriebsleistung dem Antriebssystem zugeführt und von diesem dazu verwendet, die Lokomotive anzutreiben bzw. zu bewegen.

Dabei bildet ein erstes Energiebereitstellungssystem ein sogenanntes Hauptenergiebereitstellungssystem bzw. Hauptsystem. Ein weiteres Energiebereitstellungssystem, das (parallel jedoch) zeitversetzt zum Hauptenergiebereitstellungssystem verwendet werden soll, bildet ein sogenanntes erstes Nebenenergiebereitstellungssystem bzw. erstes Nebensystem.

Weitere Energiebereitstellungssysteme, die wiederum parallel jedoch zeitversetzt zum Hauptenergiebereitstellungssystem und zum ersten Nebenenergiebereitstellungssystem verwendet werden sollen, bilden dann entsprechend ein zweites, drittes, etc., Nebenenergiebereitstellungssystem bzw. Nebensystem.

Die Komponenten des Hauptsystems sind vollständig auf der Lokomotive angeordnet. Damit wird ein autarker Betrieb der Lokomotive ermöglicht, da dann alle benötigten Komponenten (Energiebereitstellung bzw. Energieumformung und Antrieb) Bestandteil der Lokomotive sind.

Komponenten, die sowohl vom Hauptsystem als auch von den jeweiligen Nebensystemen nutzbar sind, werden lediglich einfach ausgeführt.

In einer bevorzugten Weiterbildung sind diese Komponenten, wie eingangs beschrieben, auf der Lokomotive selbst angeordnet.

In einer alternativen Ausgestaltung sind diese Komponenten zumindest teilweise auf dem nachfolgend beschriebenen Wagen angeordnet.

Komponenten, die nur von den jeweiligen Nebensystemen nutzbar sind, werden auf einem Wagen angeordnet.

Der Wagen ist bevorzugt unmittelbar mit der Lokomotive gekoppelt - beide bilden somit quasi ein Gespann.

Alternativ dazu kann die Lokomotive mit dem Wagen auch durch Leitungsverlängerungen, die durch weitere (Nutz-)Wagen hindurchführen, mittelbar verbunden sein.

Nachfolgend werden gängige Energiebereitstellungssysteme mit Komponenten sowie deren Aufteilung zwischen Lokomotive und Wagen angegeben, sofern es sich um Nebensysteme handelt:
Wechselstrombetrieb:
   Anordnung auf dem Wagen:
      - Stromabnehmer bzw. Pantograph
      - Hauptschalter
      - Transformator
      - Vierquadrantensteller
      - (Teil-) Zwischenkreis
   Anordnung auf der Lokomotive:
      - (Teil-) Zwischenkreis
      - Umrichter bzw. Frequenzumrichter für die Fahrmotoren
      - Drehstrom-Asynchronmotor(-en) als Fahrmotor(-en)
      - Kühlung für Fahrmotor(-en),
      - Druckluftbremsanlage
      - Kompressorsystem für Druckluftbremsanlage
Gleichstrombetrieb:
   Anordnung auf dem Wagen:
      - Stromabnehmer bzw. Pantograph
      - Hauptschalter bzw. Schnellschalter
      - Hochsetzsteller (optional, wandelt die Gleichspannung in die gewünschte Zwischenkreisspannung um)
      - (Teil-) Zwischenkreis
   Anordnung auf der Lokomotive:
      - (Teil-) Zwischenkreis
      - Umrichter bzw. Frequenzumrichter für die Fahrmotoren
      - Drehstrom-Asynchronmotor(-en) als Fahrmotor(-en)
      - Kühlung für Fahrmotor(-en)
      - Druckluftbremsanlage
      - Kompressoranlage für Druckluftbremsanlage
Dieselbetrieb:
   Anordnung auf dem Wagen:
      - Dieselmotor zur Stromerzeugung
      - Generator zur Erzeugung der benötigten elektrische Leistung bzw. Energie
      - Umrichter zur Anpassung der Energie an den Zwischenkreis (Spannungsanpasung)
      - (Teil-) Zwischenkreis
   Anordnung auf der Lokomotive:
      - (Teil-) Zwischenkreis
      - Umrichter **bzw.** Frequenzumrichter für die Fahrmotoren
      - Drehstrom-Asynchronmotor(-en) als Fahrmotor(-en)
      - Kühlung für Fahrmotoren,
      - Druckluftbremsanlage
      - Kompressorsystem für Druckluftbremsanlage
Energiespeicherbetrieb:
   Anordnung auf dem Wagen:
      - Energiespeicher **z.B.** Akkumulatoren, Wasserstoffspeicher mit Brennstoffzelle, Ultracaps, etc.
      - eventuell erforderliche Energieumwandler auf elektrische Energie (z.B. bei Verwendung einer Brennstoffzelle)
      - eventuell Umrichter zur Anpassung der Energiespeicherspannung in eine gewünschte Zwischenkreisspannung
      - (Teil-) Zwischenkreis
   Anordnung auf der Lokomotive:
      - (Teil-) Zwischenkreis
      - Umrichter bzw. Frequenzumrichter für die Fahrmotoren
      - Drehstrom-Asynchronmotor als Fahrmotor
      - Kühlung für Fahrmotoren
      - Druckluftbremsanlage
      - Kompressoranlage für Druckluftbremsanlage

In einer beispielhaften Übersicht, jedoch nicht einschränkend, wird nachfolgend eine Konfiguration näher beschrieben, bei der eine Lokomotive sowohl eine elektrifizierte Strecke mit AC-Hochspannung als auch eine nicht-elektrifizierte Strecke befahren können soll.

In einer bevorzugten Ausgestaltung wird dann ein Dieselantrieb als Hauptsystem und ein Wechselstromantrieb als erstes Nebensystem ausgewählt.

Die benötigten Komponenten werden bevorzugt und wie folgt zwischen der Lokomotive einerseits und dem Wagen andererseits aufgeteilt:
Auf der Lokomotive werden Komponenten des Hauptsystems, **d.h.** des Dieselantriebs, angeordnet. Diese Komponenten werden teilweise sowohl vom Hauptsystem als auch vom Nebensystem genutzt. Im Einzelnen sind dies:
- Dieselmotor
- Generator zur Erzeugung der benötigten elektrische Leistung
- (Teil-) Zwischenkreis
- Umrichter
- Drehstrom-Asynchronmotor(-en) als Fahrmotor(-en)
- Kühlung für Fahrmotoren,
- Druckluftbremsanlage
- Kompressorsystem für Druckluftbremsanlage

Auf dem Wagen werden alle verbleibenden Komponenten des Nebensystems angeordnet. Diese Komponenten werden nur vom Nebensystem genutzt. Dies sind:
- Stromabnehmer bzw. Pantograph
- Hauptschalter
- Transformator
- Vierquadrantensteller
- (Teil-) Zwischenkreis

Zwischen Hauptsystem und Nebensystem wird seitens der Lokomotive je nach Streckenabschnitt eine Auswahl getroffen. Die jeweils benötigten Komponenten werden über eine Auswahlschaltung miteinander verbunden, um die Lokomotive in Abhängigkeit des Streckenabschnitts zu betreiben.

Die Lokomotive beinhaltet somit alle benötigten Komponenten für einen autarken, Diesel-basierten Betrieb in einer vorgegebenen ersten Strecke.

In einer bevorzugten Weiterbildung sind etwaige (Teil-) Zwischenkreise beispielswiese über Trenner abtrennbar ausgeführt.

In einer bevorzugten Weiterbildung sind Anschlusspunkte für etwaige (Teil-) Zwischenkreise an einem Ende oder an beiden Enden der Lokomotive angeordnet, so dass ein Anschluss von außerhalb der Lokomotive ermöglicht wird.

Über entsprechend ausgestaltete elektrische Verbindungen der Teil-Zwischenkreise des Wagens und der Lokomotive wird ein betriebsfähiges Lokomotive-Wagen Gespann generiert. Dabei wird das Energiebereitstellungssystem des Wagens mit den Antriebskomponenten der Lokomotive verbunden.

Die Energiebereitstellung des Wagens erfolgt wahlweise über ein oder mehrere unterschiedliche, installierte Energiebereitstellungssysteme.

In einer bevorzugten Weiterbildung wird nicht benötigter, freier Platz bzw. Volumen des Wagens, dessen Größe im Allgemeinen von einem Betreiber vorgebeben wird, für andere Zwecke als für die der Energiebereitstellung verwendet. Dieser freie Platz kann beispielswiese zum Güter-, Post- oder zum Personentransport verwendet werden.

Darüber hinaus kann der freie Platz für zusätzliche Serviceangebote (z.B. Speisewagenbetrieb, VIP-Lounge, Arbeitsbereich für Geschäftsreisende) verwendet werden, um die Wirtschaftlichkeit des gesamten Gespanns, bestehend aus Lokomotive und Wagen, zusätzlich zu erhöhen.

Die vorliegende Erfindung ermöglicht über die räumliche Zuordnung der einzelnen Komponenten zur Lokomotive bzw. zum Wagen sowie durch die Komponenten-Mehrfachnutzung eine Einsparung an Kosten, Volumen und Gewicht.

Wartungs- und Betriebskosten werden im Vergleich zum bekannten Stand der Technik reduziert bzw. eingespart.

Das Gewicht des mitzuführenden Wagens liegt deutlich unter dem Gewicht einer bislang benötigten zweiten Lokomotive, so dass darüber hinaus Energiekosten gespart und eine Abnutzung der Infrastruktur (Gleise) reduziert wird.

Die Erfindung optimiert Kosten und Verwendungszweck durch einen modulare Aufbauweise.

Nachfolgend wird die vorliegende Erfindung beispielhaft anhand einer Zeichnung näher erläutert.

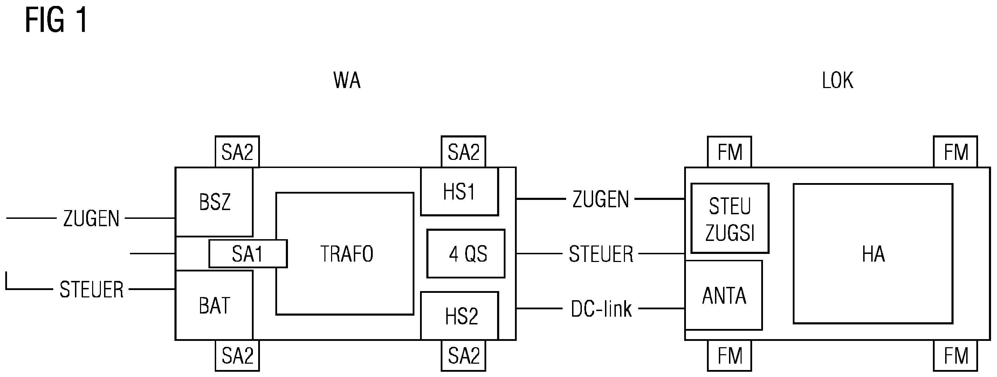

FIG 1 zeigt ein bevorzugtes Ausführungsbeispiel der Erfindung mit einem Hauptenergiebereitstellungssystem (Hauptsystem) und mit insgesamt vier Nebenenergiebereitstellungssysteme (Nebensysteme).

Eine Lokomotive LOK trägt alle Komponenten eines Hauptsystems HA, bei dem es sich hier beispielhaft um einen Dieselantrieb handelt.

Die Lokomotive LOK wird mit Hilfe von Fahrmotoren FM angetrieben, die ebenfalls in der Lokomotive LOK integriert sind.

Weiterhin trägt die Lokomotive LOK Komponenten, die für ihren autarken Betrieb als Diesel-Lokomotive benötigt werden. Beispielhaft handelt es sich dabei um ein Zugsicherungssystem ZUGSI, um ein Steuerungssystem STEU und um eine Antriebsausrüstung ANTA.

Ein mit der Lokomotive LOK gekoppelter Wagen WA trägt Komponenten der vier Nebensysteme.

Dabei handelt es sich um:
- ein erstes Nebensystem HS1, das als Wechselstrom-Energiebereitstellungssystem einer ersten Frequenz ausgebildet ist,
- ein zweites Nebensystem HS2, das als Gleichstrom-Energiebereitstellungssystem ausgebildet ist,
- ein drittes Nebensystem BSZ, dessen Energiebereitstellung unter Verwendung einer Brennstoffzelle erfolgt, und um
- ein viertes Nebensystem BAT, dessen Energiebereitstellung unter Verwendung einer Batterie erfolgt.

Das erste Nebensystem HS1 entnimmt mit Hilfe eines Stromabnehmers SA1 Leistung aus einem Streckennetz. Beim Stromabnehmer SA1 handelt es sich beispielsweise um einen auf dem Dach des Wagens WA angeordneten, aus- bzw. einfahrbaren Stromabnehmer oder Pantographen.

Das zweite Nebensystem HS2 entnimmt mit Hilfe eines Stromabnehmers SA2 Leistung aus einem Streckennetz. Beim Stromabnehmer SA2, der hier vierfach ausgeführt ist, handelt es sich beispielsweise um einen seitlichen, aus- bzw. einklappbaren Stromabnehmer.

Die beiden Nebensysteme HS1 und HS2 nutzen gemeinsam einen Transformator bzw. eine Drossel TRAFO, der ebenfalls einen Teil des Wagens WA bildet.

Für die Nebensysteme HS1 und HS2 ist außerdem ein Steller 4QS vorgesehen, der ebenfalls gemeinsam genutzt wird und der einen weiteren Teil des Wagens WA bildet.

Dabei ist der Steller 4QS als Vierquadrantensteller für das erste Nebensystem HS1 ausgebildet. Der Steller 4QS ist als Hoch-/Tiefsetzsteller für das zweite Nebensystem HS2 ausgebildet.

Erzeugte Zugenergie bzw. Leistung der vier Nebensysteme HS1 bis HS4 gelangt vom Wagen WA an die Lokomotive LOK über eine Leitung DC-link.

Eine weitere Leitung STEUER übermittelt notwendige Steuersignale beidseitig zwischen Wagen WA und Lokomotive LOK.

Der Wagen WA ist lösbar oder fest-gekuppelt mit der Lokomotive LOK verbunden.

Mit Hilfe der Leitung DC-Link kann die Lokomotive LOK vom Wagen WA her mit DC-Spannung versorgt werden.

Dazu erforderliche Komponenten, wie **z. B.** Stromrichter, Transformator, Glättungseinrichtungen, etc., sind auf dem Wagen WA angeordnet, um die zum Antrieb benötigte Energie zu erzeugen. Alternativ dazu sind sie auf der Lokomotive LOK angebracht.

Die benötigte Energie kann auch zur Versorgung eines Bordnetzes der Lokomotive LOK genutzt werden.

## Patentansprüche

1. Anordnung zum Antrieb einer Lokomotive (LOK) mit unterschiedlichen Energiebereitstellungssystemen,
- mit einer Lokomotive (LOK), die ein Hauptenergiebereitstellungssystem als Hauptsystem (HA) und ein Antriebssystem mit Fahrmotoren (FM) beinhaltet, wobei vom Hauptsystem (HA) bereitgestellte Energie als Antriebsleistung dem Antriebssystem zugeführt und von diesem zum Bewegen der Lokomotive (LOK) verwendet wird,
- mit einem Wagen (WA), der zumindest ein weiteres Energiebereitstellungssystem als Nebensystem (HS1) beinhaltet, wobei das zumindest eine Nebensystem (HS1) zeitversetzt zum Hauptsystem (HA) dazu verwendet wird, Antriebsleistung dem Antriebssystem zuzuführen,
- bei der Komponenten, die sowohl vom Hauptsystem (HA) als auch von dem zumindest einen Nebensystem (HS1) nutzbar sind, lediglich einmal ausgeführt sind, so dass diese Komponenten sowohl vom Hauptsystem (HA) als auch vom zumindest einen Nebensystem (HS1) gemeinsam genutzt werden, und
- bei der Komponenten, die nur von dem zumindest einen Nebensystem (HS1) nutzbar sind, auf dem Wagen (WA) angeordnet sind,
- bei der benötigte Komponenten des Hauptsystems (HA) vollständig auf der Lokomotive (LOK) angeordnet sind, so dass ein autarker Betrieb der Lokomotive (LOK) ermöglicht wird,
- bei der das zumindest eine Nebensystem (HS1) Wechselstrom-basiert ist und der Wagen (WA) als Komponenten des zumindest einen Nebensystems (HS1) einen Stromabnehmer, einen Hauptschalter, einen Transformator und einen Vierquadrantensteller (4QS) aufweist,
- bei der die Lokomotive (LOK) als Komponenten des Hauptsystems (HA) einen Umrichter oder Frequenzumrichter für die Fahrmotoren (FM) aufweist,
- bei der ein Zwischenkreis, der zwischen dem Vierquadrantensteller (4QS) und dem Umrichter angeordnet ist, wahlweise und zumindest teilweise auf dem Wagen (WA) oder auf der Lokomotive (LOK) angeordnet ist.

2. Anordnung nach Anspruch 1, bei der weitere Energiebereitstellungssysteme als Nebensysteme (HS2, BSZ, BAT) auf dem Wagen (WA) angeordnet sind.

3. Anordnung nach einem der vorhergehenden Ansprüche,
- bei der der Wagen (WA) unmittelbar mit der Lokomotive (LOK) gekoppelt ist, oder
- bei der die Lokomotive (LOK) mit dem Wagen (WA) durch Leitungsverlängerungen, die durch weitere Wagen (WA) führen, mittelbar verbunden ist.

4. Anordnung nach einem der vorhergehenden Ansprüche, bei der die Lokomotive (LOK) als Komponenten des Antriebssystems Drehstrom-Asynchronmotoren als Fahrmotoren (FM), eine Kühlung für die Fahrmotoren (FM), eine Druckluftbremsanlage und/oder ein Kompressorsystem für die Druckluftbremsanlage aufweist.

5. Anordnung nach Anspruch 2, bei der bei einem Gleichstrom-basierten Nebensystem (HS2)
- der Wagen (WA) als Komponenten des Nebensystems (HS2) einen Stromabnehmer, einen Hauptschalter und optional einen Hochsetzsteller aufweist,
- ein Zwischenkreis, der zwischen dem Hauptschalter bzw. dem Hochsetzsteller und dem Fahrmotor-Umrichter angeordnet ist, wahlweise und zumindest teilweise auf dem Wagen (WA) oder auf der Lokomotive (LOK) angeordnet ist.

6. Anordnung nach Anspruch 2, bei der bei einem auf einem Dieselbetrieb-basierten Nebensystem
- der Wagen (WA) als Komponenten des Nebensystems einen Dieselmotor, einen mit dem Dieselmotor verbundenen Generator zur Erzeugung der benötigten elektrischen Leistung bzw. Energie und optional einen Umrichter zur Anpassung der elektrischen Leistung bzw. Energie an einen Zwischenkreis aufweist,
- der Zwischenkreis, der zwischen dem Generator bzw. dem wahlweisen Umrichter und dem Fahrmotor-Umrichter angeordnet ist, wahlweise und zumindest teilweise auf dem Wagen (WA) oder auf der Lokomotive (LOK) angeordnet ist.

7. Anordnung nach Anspruch 2, bei der bei einem auf einem Energiespeicherbetrieb-basierten Nebensystem
- der Wagen (WA) als Komponenten des Nebensystems einen Energiespeicher, insbesondere einen Akkumulator, einen Wasserstoffspeicher mit Brennstoffzelle und/oder Ultracaps, aufweist,
- der Wagen (WA) optional einen Energieumwandler aufweist, der ihm aus dem Energiespeicher zugeführte Energie in elektrische Energie umwandelt,
- der Wagen (WA) optional einen Umrichter zur Anpassung der gespeicherten Energie in eine gewünschte Zwischenkreisspannung aufweist,
- ein Zwischenkreis, der zwischen dem Energiespeicher und dem Fahrmotor-Umrichter angeordnet ist, wahlweise und zumindest teilweise auf dem Wagen (WA) oder auf der Lokomotive (LOK) angeordnet ist.

8. Anordnung nach einem der vorhergehenden Ansprüche,
- bei der ein Dieselantrieb als Hauptsystem (HA) ausgebildet ist,
- bei der die Lokomotive (LOK) als Komponenten des Hauptsystems (HA) einen Dieselmotor und einen mit ihm verbundenen Generator zur Erzeugung der benötigten elektrische Leistung aufweist,

9. Anordnung nach Anspruch 2,
- bei der ein Gleichstrom-basiertes oder ein Wechselstrom-basiertes Energiebereitstellungssystem als Hauptsystem (HA) und ein Dieselantrieb als Nebensystem ausgebildet ist,
- bei der der Wagen (WA) als Komponenten des Nebensystems einen Dieselmotor, einen Generator und einen Umrichter zur Erzeugung einer DC-link Gleichspannung aufweist,
- bei der die Lokomotive (LOK) als Komponenten des Hauptsystems einen Stromabnehmer, einen mit ihm verbundenen Transformator bzw. Drossel zur Erzeugung einer benötigten elektrische Leistung und einen Umrichter mit einem Vierquadrantensteller bzw. Hochsetzsteller bzw. Tiefsetzsteller aufweist,
- bei der ein Zwischenkreis, der zwischen dem Umrichter und dem Fahrmotorumrichter angeordnet ist, wahlweise und zumindest teilweise auf dem Wagen oder auf der Lokomotive angeordnet ist.

10. Anordnung nach einem der vorhergehenden Ansprüche, bei der etwaige (Teil-) Zwischenkreise über einen Trenner abtrennbar ausgeführt sind.

11. Anordnung nach einem der vorhergehenden Ansprüche, bei der Anschlusspunkte für etwaige (Teil-) Zwischenkreise an einem Ende oder an beiden Enden der Lokomotive (LOK) angeordnet sind, so dass ein Anschluss von außerhalb der Lokomotive (LOK) ermöglicht wird.

12. Anordnung nach einem der vorhergehenden Ansprüche, bei der nicht benötigtes, freies Volumen des Wagens (WA) für eine Verwendung zum Güter-, Post- oder Personentransport oder als Servicebereich ausgestaltet ist.

## Claims

1. Arrangement for driving a locomotive (LOK) having various energy-provision systems,
- with a locomotive (LOK) which includes a main energy-provision system as the main system (HA), and a drive system with traction motors (FM), wherein energy provided by the main system (HA) is fed as drive power to the drive system and used by the latter to move the locomotive (LOK),
- with a carriage (WA) which includes at least one further energy-provision system as an ancillary system (HS1), wherein the at least one ancillary system (HS1) is used to feed drive power to the drive system at different times from the main system (HA),
- in which components which can be used both by the main system (HA) and by the at least one ancillary system (HS1) are implemented only once, such that these components are jointly used both by the main system (HA) and by the at least one ancillary system (HS1), and
- in which components which can be used only by the at least one ancillary system (HS1) are arranged on the carriage (WA),
- wherein the required components of the main system (HA) are completely arranged on the locomotive (LOK), such that autonomous operation of the locomotive (LOK) is made possible,
- wherein the at least one ancillary system (HS1) is AC-based and the carriage (WA), as components of the at least one ancillary system (HS1), has a current collector, a main switch, a transformer and a four-quadrant actuator (4QS),
- wherein the locomotive (LOK), as components of the main system (HA), has a converter or frequency converter for the traction motors (FM),
- wherein an intermediate circuit, which is arranged between the four-quadrant actuator (4QS) and the converter, is arranged optionally and at least partially on the carriage (WA) or on the locomotive (LOK).

2. Arrangement according to Claim 1, wherein further energy-provision systems are arranged on the carriage (WA) as ancillary systems (HS2, BSZ, BAT).

3. Arrangement according to either of the preceding claims,
- wherein the carriage (WA) is coupled directly to the locomotive (LOK), or
- wherein the locomotive (LOK) is connected indirectly to the carriage (WA) by extended cables which lead through further carriages (WA).

4. Arrangement according to one of the preceding claims, wherein the locomotive (LOK), as components of the drive system, has three-phase asynchronous motors as traction motors (FM), a cooling system for the traction motors (FM), a compressed-air braking system and/or a compressor system for the compressed-air braking system.

5. Arrangement according to Claim 2, wherein, in a DC-based ancillary system (HS2),
- the carriage (WA) has, as components of the ancillary system (HS2), a current collector, a main switch and optionally a boost converter,
- an intermediate circuit, which is arranged between the main switch or the boost converter and the traction motor inverter, is arranged optionally and at least partially on the carriage (WA) or on the locomotive (LOK).

6. Arrangement according to Claim 2, wherein, in an ancillary system based on a diesel mode,
- the carriage (WA) has, as components of the ancillary system, a diesel engine, a generator connected to the diesel engine for generating the required electric power or energy, and optionally an inverter for adapting the electric power or energy to an intermediate circuit,
- the intermediate circuit, which is arranged between the generator or the optional inverter and the traction motor inverter, is arranged optionally and at least partially on the carriage (WA) or on the locomotive (LOK).

7. Arrangement according to Claim 2, wherein, in an ancillary system based on an energy storage mode,
- the carriage (WA), as components of the ancillary system, has an energy store, in particular a storage battery, a hydrogen store with a fuel cell, and/or ultracaps,
- the carriage (WA) optionally has an energy converter which converts energy fed to it from the energy store into electrical energy,
- the carriage (WA) optionally has an inverter for adapting the stored energy to a desired intermediate circuit voltage,
- an intermediate circuit, which is arranged between the energy store and the traction motor inverter, is arranged optionally and at least partially on the carriage (WA) or on the locomotive (LOK) .

8. Arrangement according to one of the preceding claims,
- wherein a diesel drive is designed as the main system (HA),
- wherein the locomotive (LOK), as components of the main system (HA), has a diesel engine and a generator connected to it for generating the required electrical power.

9. Arrangement according to Claim 2,
- wherein a DC-based or AC-based energy-provision system is designed as the main system (HA) and a diesel drive is designed as the ancillary system,
- wherein the carriage (WA), as components of the ancillary system, has a diesel engine, a generator and an inverter for generating a DC-link DC voltage,
- wherein the locomotive (LOK) , as components of the main system, has a current collector, a transformer or choke connected to it for generating a required electrical power and an inverter with a four-quadrant actuator or boost converter or buck converter,
- wherein an intermediate circuit, which is arranged between the inverter and the traction motor inverter, is arranged optionally and at least partially on the carriage or on the locomotive.

10. Arrangement according to one of the preceding claims, in which any (partial) intermediate circuits are designed such that they can be isolated via a disconnector.

11. Arrangement according to one of the preceding claims, wherein connection points for any (partial) intermediate circuits are arranged at one end or at both ends of the locomotive (LOK), so that connection from outside the locomotive (LOK) is made possible.

12. Arrangement according to one of the preceding claims, wherein free volume within the carriage (WA) which is not needed is configured for use for transporting goods, mail or passengers, or as a service area.

## Revendications

1. Dispositif de propulsion d'une locomotive (LOK) avec différents systèmes d'alimentation en énergie,
- avec une locomotive (LOK) qui comprend un système principal d'alimentation en énergie comme système principal (HA) et un système de propulsion avec des moteurs de traction (FM), de l'énergie mise à disposition par le système principal (HA) étant acheminée au système de propulsion en tant que puissance motrice et étant utilisée par celui-ci pour le mouvement de la locomotive (LOK),
- avec un wagon (WA) qui comprend au moins un autre système d'alimentation en énergie comme système auxiliaire (HS1), l'au moins un système auxiliaire (HS1) étant utilisé en décalage temporel par rapport au système principal (HA) pour acheminer de la puissance motrice au système de propulsion,
- dans lequel des composants utilisables aussi bien par le système principal (HA) que par l'au moins un système auxiliaire (HS1) ne sont réalisés qu'une seule fois, de sorte que ces composants soient utilisés en commun par le système principal (HA) et aussi par l'au moins un système auxiliaire (HS1), et
- dans lequel des composants qui ne sont utilisables que par l'au moins un système auxiliaire (HS1) sont disposés sur le wagon (WA),
- dans lequel des composants nécessaires du système principal (HA) sont disposés entièrement sur la locomotive (LOK), pour rendre possible une propulsion autosuffisante de la locomotive (LOK),
- dans lequel l'au moins un système auxiliaire (HS1) est en courant alternatif et le wagon (WA), en tant que composant de l'au moins un système auxiliaire (HS1), présente un pantographe, un commutateur principal, un transformateur et un convertisseur à quatre quadrants (4QS) ,
- dans lequel la locomotive (LOK) , en tant que composant du système principal (HA), présente un onduleur ou un convertisseur de fréquence pour les moteurs de traction (FM),
- dans lequel un circuit intermédiaire, qui est disposé entre le convertisseur à quatre cadrans (4QS) et l'onduleur, est disposé au choix et au moins en partie sur le wagon (WA) ou sur la locomotive (LOK).

2. Dispositif selon la revendication 1, dans lequel d'autres systèmes d'alimentation en énergie sont disposés en tant que systèmes auxiliaires (HS2, BSZ, BAT) sur le wagon (WA).

3. Dispositif selon l'une quelconque des revendications précédentes,
- dans lequel le wagon (WA) est couplé directement à la locomotive (LOK), ou
- dans lequel la locomotive (LOK) est liée indirectement au wagon (WA) par des lignes de prolongement qui courent à travers d'autres wagons (WA).

4. Dispositif selon l'une quelconque des revendications précédentes, dans lequel la locomotive (LOK), en tant que composant du système de propulsion, présente un moteur asynchrone sur courant continu comme moteur de traction (FM), un refroidissement pour le moteur de traction (FM), un dispositif de freinage à air comprimé et/ou un système de compresseur pour le dispositif de freinage à air comprimé.

5. Dispositif selon la revendication 2, dans lequel dans un système auxiliaire basé sur du courant continu (HS2),
- le wagon (WA), en tant que composant du système auxiliaire (HS2), présente un pantographe, un commutateur principal et facultativement un convertisseur élévateur,
- un circuit intermédiaire, qui est disposé entre le commutateur principal ou resp. le convertisseur élévateur et l'onduleur du moteur de traction, est disposé au choix et au moins en partie sur le wagon (WA) ou sur la locomotive (LOK).

6. Dispositif selon la revendication 2, dans lequel dans un système auxiliaire basé sur une propulsion Diesel,
- le wagon (WA), en tant que composant du système auxiliaire présente un moteur Diesel, un générateur lié au moteur Diesel pour générer la puissance électrique ou resp. l'énergie nécessaire, et facultativement un onduleur pour adapter la puissance électrique ou resp. l'énergie à un circuit intermédiaire,
- le circuit intermédiaire, qui est disposé entre le générateur ou resp. l'onduleur au choix, et l'onduleur du moteur de traction est disposé au choix et au moins en partie sur le wagon (WA) ou sur la locomotive (LOK).

7. Dispositif selon la revendication **2,** dans lequel dans un système auxiliaire basé sur un accumulateur d'énergie
- le wagon (WA), en tant que composant du système auxiliaire présente un accumulateur d'énergie, en particulier un accumulateur, un stockage d'hydrogène avec une pile à combustible et/ou des ultracaps,
- le wagon (WA) présente facultativement un convertisseur d'énergie qui lui convertit l'énergie acheminée depuis l'accumulateur d'énergie en énergie électrique,
- le wagon (WA) présente facultativement un onduleur pour adapter l'énergie accumulée à la tension désirée d'un circuit intermédiaire,
- un circuit intermédiaire, qui est disposé entre l'accumulateur d'énergie et l'onduleur du moteur de traction, est disposé au choix et au moins en partie sur le wagon (WA) ou sur la locomotive (LOK).

8. Dispositif selon l'une quelconque des revendications précédentes,
- dans lequel un moteur Diesel constitue le système principal (HA),
- dans lequel la locomotive (LOK), en tant que composant du système principal (HA), présente un moteur Diesel et un générateur qui lui est raccordé pour produire la puissance électrique nécessaire.

9. Dispositif selon la revendication 2,
- dans lequel un système d'alimentation en énergie en courant continu ou en courant alternatif constitue le système principal (HA), et un moteur Diesel constitue un système auxiliaire,
- dans lequel le wagon (WA), en tant que composant du système auxiliaire, présente un moteur Diesel, un générateur et un onduleur pour produire une liaison DC en courant continu,
- dans lequel la locomotive (LOK), en tant que composant du système principal, présente un pantographe, un transformateur qui lui est raccordé ou resp. un étrangleur pour produire la puissance électrique nécessaire, et un onduleur avec un convertisseur à quatre quadrants ou resp. un convertisseur élévateur ou resp. un convertisseur abaisseur,
- dans lequel un circuit intermédiaire, qui est disposé entre l'onduleur et l'onduleur du moteur de traction, est disposé au choix et au moins en partie sur le wagon ou sur la locomotive.

10. Dispositif selon l'une quelconque des revendications précédentes, dans lequel les éventuels circuits intermédiaires (partiels) sont conçus séparables grâce à un séparateur.

11. Dispositif selon l'une quelconque des revendications précédentes, dans lequel des points de raccordement pour d'éventuels circuits intermédiaires (partiels) sont disposés à une extrémité ou aux deux extrémités de la locomotive (LOK), pour permettre un raccordement de l'extérieur de la locomotive (LOK).

12. Dispositif selon l'une quelconque des revendications précédentes, dans lequel un volume libre non nécessaire du wagon (WA) est conçu pour le transport de marchandises, de courrier ou de personnes ou comme zone de service.
